**Europäisches Patentamt**

**European Patent Office**

**Office européen des brevets**

(19)

(11) Veröffentlichungsnummer: **0 014 934**
**B1**

(12) # EUROPÄISCHE PATENTSCHRIFT

(45) Veröffentlichungstag der Patentschrift:
01.08.84

(51) Int. Cl.³: **G 01 K 17/08**, G 01 F 1/68

(21) Anmeldenummer: **80100678.4**

(22) Anmeldetag: **11.02.80**

(54) **Vorrichtung zur Messung des Massenflusses und des Wärmeflusses sowie Verfahren zur Bestimmung des Massenflusses.**

(30) Priorität: **17.02.79 DE 2906186**
**06.11.79 DE 2944707**

(43) Veröffentlichungstag der Anmeldung:
**03.09.80 Patentblatt 80/18**

(45) Bekanntmachung des Hinweises auf die Patenterteilung:
**01.08.84 Patentblatt 84/31**

(84) Benannte Vertragsstaaten:
**AT BE CH FR GB IT NL SE**

(56) Entgegenhaltungen:
**CH - A - 223 336**
**DE - C - 476 685**
**FR - A - 2 353 045**
**GB - A - 131 375**
**US - A - 3 918 300**

(73) Patentinhaber: **Battelle-Institut e.V., Am Römerhof 35 Postfach 900 160, D-6000 Frankfurt/Main 90 (DE)**

(72) Erfinder: **Weisser, Günther, Dr., Graf Stauffenberg Ring 82, D-6380 Bad Homburg v.d.H. (DE)**
Erfinder: **Starkloff, Bernd, Dr., Saarstrasse 2a, D-6380 Bad Homburg v.d.H. (DE)**
Erfinder: **Stösser, Klaus, Amselweg 16, D-6238 Hofheim/Langenhain (DE)**

(74) Vertreter: **Rupprecht, Klaus, Dipl.-Ing., Am Römerhof 35, D-6000 Frankfurt (Main) 90 (DE)**

## Beschreibung

Die Erfindung betrifft eine Vorrichtung zur Messung des Massenflusses und des Wärmeflusses bei einem Förderungssystem für Fluide, bestehend im wesentlichen aus je einer in die Zulaufleitung und einer in die Rücklaufleitung einzufügenden Durchflussleitung, aus einer Wärmeleitstrecke zwischen diesen beiden Durchflussleitungen und aus Temperaturmessfühlern in den Durchflussleitungen, wobei der Wärmedurchgang durch die Wärmeleitstrecke hindurch geringer ist als der Wärmeübergang an den beiden Grenzflächen zwischen dem Fluid und der Wärmeleitstrecke.

Sie bezieht sich ferner auf ein Verfahren zur Bestimmung des Massenflusses bei einem Förderungssystem für Fluide, bei dem über eine Wärmeleitstrecke eine definierte Wärmemenge pro Zeiteinheit vom Zulauf zum Rücklauf oder umgekehrt transportiert wird sowie am oder nahe der Enden der beiden Wärmeübergangszonen im Zulauf und Rücklauf Temperaturen oder Temperaturdifferenzen des Fluids gemessen werden und aus den Temperaturdifferenzen der Massenfluss des Fluids ermittelt wird. Die Erfindung gestattet die Messung der Wärmeflusses und des Massenflusses in geschlossenen Wärmetransportsystemen; sie ist insbesondere zur Bestimmung des Heizöl- oder Kraftstoffverbrauchs bei Heizanlagen oder Verbrennungsmotoren geeignet.

Zurzeit werden Heizanlagen in bestimmten Intervallen von Fachleuten auf optimalen Wirkungsgrad überprüft und einreguliert. Dabei sind im allgemeinen Abgastemperaturen und -zusammensetzungen die Basis für die Berechnung des Kesselwirkungsgrades. Die Durchführung dieser Messungen ist jedoch mit einem erheblichen Aufwand verbunden. Der Kesselwirkungsgrad liesse sich jedoch einfach und permanent durch Vergleich der abgegebenen Wärmemenge mit dem Brennstoffverbrauch ermitteln.

Zur Heizkostenabrechnung werden an den Heizkörpern Verdunstungswärmemengenmesser angebracht, die extern gewartet und abgelesen werden müssen. Sie erlauben nur ein relativ ungenaues Ablesen und weisen systematische Fehler auf. Z.B. kann eine Erwärmung des Heizkörpers durch andere Quellen, wie Sonneneinstrahlung, das Messergebnis verfälschen. Mit Verdunstungswärmemengenmesser kann auch der momentane Wärmeverbrauch nicht ermittelt werden. Hinzu kommt, dass die Summation des Wärmeverbrauchs über die Wohnung nicht automatisiert durchführbar ist.

Ferner ist bekannt, zur Erfassung des Wärmeverbrauchs für ein ganzes Gebäude am Eingangspunkt einer Fernheizung Wärmemengenzähler einzusetzen. Sie erhalten im allgemeinen mechanische Durchflussmengenmesser in Form von Turbinenrädchen, Federscheiben, Schwebekörpern oder Staudruckdurchflussmessern. Diese mechanischen Bauteile sind in der Regel wenig zuverlässig. Andere bekannte Methoden der Durchflussmengenmessung, z.B. mittels Ultraschall oder induktiv wirkende Messeinrichtungen, sind ohne erheblichen Aufwand nicht verwendbar.

Eine bekannte Vorrichtung zur messtechnischen Ermittlung von Wärmemengen besteht aus einer Festkörper-Brücke zwischen Vorlauf- und Rücklaufleitung und Temperaturmessstellen auch innerhalb der wärmeleitenden Verbindung (DE-A-2 330 498). Die Festkörper-Brücke wird durch einen Stapel aufeinanderliegender Scheiben realisiert. Ferner sind Kalorimeter für denselben Zweck bekannt, die im wesentlichen aus hohlen, wärmeleitenden Körpern zwischen Vorlauf- und Rücklaufleitung und in den Körpern angeordneten Thermoelementen bestehen (DE-C-884 577; US-A-2 633 747 und 2 633 748). Bei allen diesen Vorrichtungen müssen Temperaturen innerhalb der Brücke, in manchen Fällen innerhalb und ausserhalb der Brücke gemessen werden, wodurch komplizierte Konstruktionen erforderlich sind. Auch ist die Genauigkeit der Messwerte nicht ausreichend. In einer anderen bekannten Vorrichtung (FR-A-2 353 045) wird die Wärmeleitstrecke durch Einschnürung eines guten Leiters so ausgebildet, dass der Wärmedurchgang geringer ist als der Wärmeübergang an den beiden Grenzflächen zwischen Fluid und Wärmeleitstrecke. Ein minimaler Wärmemengefluss durch die Wärmeleitstrecke wird aber damit noch nicht erreicht.

Zurzeit wird der Verbrauch von Heizöl oder Kraftstoffen integral über längere Zeiträume bei der Tankfüllung bestimmt. Um aber Heizanlagen oder Kraftfahrzeugmotoren jederzeit auf energiesparende Betriebsweise überprüfen zu können, muss der momentane Verbrauch, d.h. die Durchflussmenge oder der Massenfluss bekannt sein.

Zur Durchflussmengenmessung werden derzeit aus Kostengründen lediglich mechanische Verfahren eingesetzt. Zur Verwendung kommen dabei z.B. Flügelradzähler, die meist nach einer bestimmten Betriebszeit infolge Verschmutzung ausfallen und bei kleinen Durchflussmengen keine genaue Bestimmung erlauben. Andere Vorrichtungen, z.B. Federscheiben-, Schwebekörper-, Staudruck-, Ultraschall- oder induktive Durchflussmengenmesser sind z.T. aus technischen Gründen nicht einsetzbar und meist zu kostspielig.

Der vorliegenden Erfindung liegt daher die Aufgabe zugrunde, eine konstruktiv einfache Vorrichtung zu schaffen, mit der unter Vermeidung der oben genannten Nachteile bekannter Methoden der kurzzeitige, d.h. momentane, sowie der integrale Massenfluss oder die Durchflussmenge und der Wärmefluss lediglich durch Messung von Temperaturen im Fluid mit hoher Genauigkeit in einfacher Weise ermittelt werden kann.

Es hat sich gezeigt, dass diese Aufgabe mit dem Gegenstand des Anspruchs 1 zu lösen ist. Vorteilhafte Ausführungen der erfindungsgemässen Vorrichtung sind in den Ansprüchen 2 bis 6 erläutert.

Das Verfahren nach Anspruch 7 bietet eine weitere Möglichkeit, die gestellte Aufgabe zu lösen, wobei die Ansprüche 8 bis 10 spezielle Ausführungen des erfindungsgemässen Verfahrens darstellen.

Die Wärmeleitstrecke lässt sich in verschiedener Weise realisieren. Es muss jedoch eine messbare Temperaturänderung in der Zu- bzw. Ableitung des Fluids erzeugt werden.

Zur Erzielung einer Proportionalität zwischen Temperaturdifferenz und zu- und/oder abgeführter Wärmemenge wird dafür gesorgt, dass der Einfluss der Wärmeleitung höher ist als der Einfluss des Oberflächenwärmeübergangs. Dies kann z.B. erreicht werden durch Verwendung eines Materials, das eine vergleichsweise geringe Wärmeleitfähigkeit aufweist, z.B. Glas. Als Wärmeleitstrecke zwischen Zulaufleitung und Rücklaufleitung kann z.B. ein spezieller Gegenstrom-Wärmeaustauscher verwendet werden. Voraussetzung ist, dass ein möglichst geringer Wärmedurchgang (fest) bei möglichst grossem Wärmeübergang (flüssig/fest und fest/flüssig) gewährleistet ist. Dies kann z.B. erzielt werden, wenn man die Zulaufleitung und Rücklaufleitung vereinigt und für den Wärmeübergang eine Trennwand mit stark vergrösserter Oberfläche vorsieht. Ferner können im Wärmetauscher Engpässe geschaffen werden, z.B. durch bestimmte Hohlteile, oder im Transportmedium kann die Oberfläche erhöht werden, z.B. durch Einbringen von Heiz- oder Kühlrippen. Eine gute Durchmischung der Flüssigkeit kann z.B. durch Vorsehen von Füllkörpern, z.B. Glaskugeln, erzielt werden. Die Wärmeleitstrecke muss inklusive der Temperaturmessstellen nach aussen hin gut isoliert bzw. wärmegedämmt sein.

Die für den optimalen Wärmeübergang vom Fluid zur Festkörper-Wärmeleitstrecke notwendige grosse Oberfläche kann auch durch den Einsatz eines Verbundwerkstoffs erhalten werden. Benutzt man nämlich Materialien wie Emaille oder Kunststoffe, z.B. Teflon – die allerdings dann auf ein Trägermaterial aufgebracht werden müssen –, als Festkörper-Wärmeleitstrecke, so ist deren Wärmeleitung so gering, dass eine genügend grosse Oberfläche gewährleistet ist. Bei einer konzentrischen Ausführungsform der Durchflussleitungen, in der die kältere Flüssigkeit aussen und die wärmere innen im Gegenstrom geführt werden, kann man den gewünschten Effekt erhalten, wenn ein Stahlrohr von ca. 2 mm Dicke einseitig oder beidseitig mit Emaille mit Schichtdicken von ca. 1 mm oder mit Kunststoffen mit Schichtdicken von ca. 0,1 mm beschichtet wird.

Die erforderliche Temperatur- bzw. Temperaturdifferenzmessungen werden vorzugsweise durch Thermoelemente, NTC-Widerstände oder Transistoren an geeigneten Stellen der Leitungsaussenwand des Fluids vorgenommen. Vorzugsweise werden die Temperaturen bzw. Temperaturdifferenzen am oder nahe der Enden der beiden Wärmeübergangszonen im Zulauf und Rücklauf gemessen, d.h. bezogen auf die Durchflussrichtung.

a) am Anfang und Ende der Wärmeleitstrecke an der Zulaufleitung ($T_1$–$T_2$)

b) am Anfang und Ende der Wärmeleitstrecke an der Rücklaufleitung ($T_4$–$T_3$)

c) am Anfang der Wärmeleitstrecke an der Zulaufleitung und Rücklaufleitung ($T_1$–$T_4$)

d) am Ende der Wärmeleitstrecke an der Zulaufleitung und Rücklaufleitung ($T_2$–$T_3$).

Vorzugsweise sind von den vier möglichen Temperaturmesspunkten am Anfang und am Ende der Wärmeleitstrecke im Zulauf und Rücklauf nur drei mit einem Temperaturfühler besetzt und aus den drei Messwerten zwei Differenzen, z.B. $T_1$–$T_2$ und $T_1$–$T_4$ oder $T_4$–$T_3$ und $T_2$–$T_3$ oder $T_1$–$T_2$ und $T_2$–$T_3$ oder $T_4$–$T_3$ und $T_1$–$T_4$, bildbar, die an die Auswerteeinheit gelangen. Aus den Temperaturdifferenzen lässt sich der Massenfluss bzw. der Wärmefluss bestimmen.

Erfindungsgemäss wird zur Bestimmung des Massenflusses erstens zwischen Zulauf und Rücklauf eine geringe, nicht näher zu definierende Temperaturänderung von weniger als 10 °C, vorzugsweise weniger als 5 °C und insbesondere 3 °C, erzeugt und zweitens über eine Wärmeleitstrecke eine definierte Wärmemenge pro Zeiteinheit vom Zulauf zum Rücklauf oder umgekehrt transportiert.

Die erforderliche Temperaturänderung kann durch Kühlung oder geringfügige Heizung des Fluids erzielt werden. Bei Förderungssystemen nach dem Umlaufprinzip, bei denen die Verbrauchsleitung abgezweigt ist, ist es vorteilhaft, die Kühl- bzw. Heizeinrichtung nach der Abzweigung der Verbrauchsleitung anzubringen, damit lediglich die rückfliessende Menge erwärmt bzw. gekühlt zu werden braucht. Dies jedoch entfällt bei Systemen, z.B. Kraftfahrzeugen, bei denen moderne Vergaser bzw. Einspritzpumpen systembedingt die erforderliche nicht näher zu definierende Temperaturänderung erzeugen. Bei solchen Systemen wird die Verbrauchsmenge aus der Differenz der Massenflüsse des Zulaufs und des Rücklaufs ermittelt. Somit kann der Wärmefluss, d.h. die Wärmemenge pro Zeiteinheit, sowie der Massenfluss ohne Verwendung mechanischer Bauteile bestimmt werden. Mit der erfindungsgemässen Vorrichtung werden ausschliesslich Temperaturen bzw. Temperaturdifferenzen gemessen, die erhaltenen Informationen direkt als elektrische Grössen zur Verfügung gestellt und elektronisch in beliebiger Weise weiterverarbeitet. Vorzugsweise werden die Messwerte in elektrische Signale umgewandelt, analog/digital gewandelt, von einem Mikroprozessor rechnerisch geglättet und weiterverarbeitet. Dadurch können Überwachung, Steuerung und Abrechnung von jeder beliebigen Stelle aus vorgenommen werden.

Im folgenden wird die Erfindung anhand von Zeichnungen näher erläutert. Es zeigen in schematischer Vereinfachung

Fig. 1 ein Wärmetransportsystem mit einer Wärmeleitstrecke zwischen Zu- und Ableitung;

Fig. 2 den Temperaturverlauf in der Zu- und Ableitung bei Vorhandensein einer Wärmeleitstrecke;

Fig. 3 eine mögliche Realisierung der Wärmeleitstrecke;

Fig. 4 ein Förderungssystem für Fluide nach dem Umlaufprinzip mit Temperaturdifferenzerzeugung durch Kühlung oder Heizung, mit einer Wärmeleitstrecke zwischen Zulaufleitung und Rücklaufleitung und

Fig. 5 den Temperaturverlauf in der Zulaufleitung und Rücklaufleitung bei dem in Fig. 4 gezeigten Förderungssystem.

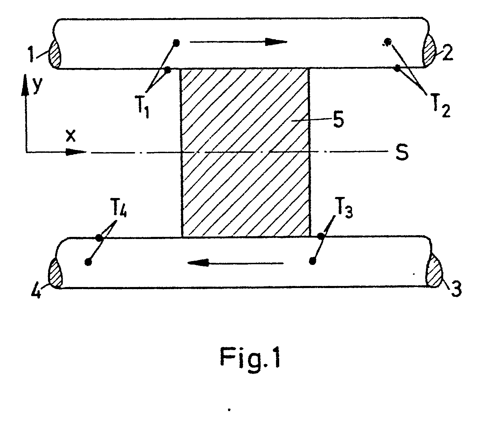

In Fig. 1 ist ein Wärmetransportsystem, das sowohl eine Warmwasserheizung als auch eine Kühlanlage sein kann, schematisch dargestellt. Im folgenden wird der Einsatz der erfindungsgemässen Vorrichtung in einer Warmwasserheizung erläutert. Demzufolge ist zwischen den Punkten 1 und 2 ein Stück des Vorlaufrohres gezeichnet, in dem das Warmwasser von 1 nach 2 fliesst und sich auf dem höheren Temperaturniveau befindet. Zwischen 3 und 4 liegt das Rücklaufrohr, in dem das Wasser von 3 nach 4 fliesst und sich auf dem niedrigeren Temperaturniveau befindet. Zwischen Vor- und Rücklauf befindet sich die Wärmeleitstrecke 5, die als schraffierte Fläche gezeichnet ist. Sie kann z.B. in einem Wärmetauscher aus wärmeleitendem Material realisiert werden, der hier der Einfachheit halber als geometrisch-symmetrisch zur Symmetrieachse S angenommen ist. Weiterhin wird vorausgesetzt, dass das aus Vorlauf, Rücklauf und Wärmetauscher bestehende Stück gegenüber der Umgebungstemperatur ausreichend wärmeisoliert ist.

Beim Betrieb dieses Systems durchfliesst das Warmwasser mit der Temperatur $T_1$ den Temperaturmesspunkt 1 und bleibt bis zu Beginn des Wärmetausches auf dem Temperaturniveau $T_1$. Durch die Wärmeleitstrecke wird ab diesem Punkt eine später zu ermittelnde Wärmemenge zum Rücklauf abgeführt, so dass im Vorlauf hinter der Wärmeleitstrecke das Wasser eine niedrigere Temperatur $T_2$ besitzt, mit der es den Temperaturmesspunkt 2 durchfliesst. Nach Durchlaufen der Warmwasserheizungen gelangt das Wasser zum Temperaturmesspunkt 3 mit der Temperatur $T_3$. Durch die Wärmeleitstrecke erhält es vom Vorlauf eine bestimmte Wärmemenge zugeführt, so dass es die Wärmeleitstrecke mit der höheren Temperatur $T_4$ verlässt, mit der es auch den Temperaturmesspunkt 4 durchläuft. Danach wird es durch das Heizungssystem, z.B. Heizkessel, Fernwärme usw. wieder auf die Temperatur $T_1$ erhitzt.

Wenn die spezifische Wärme des warmen Wassers genauso gross ist wie die des kälteren Wassers, gelten die folgenden Beziehungen:

$$\Delta_1 T = T_1 - T_2 = T_4 - T_3 \text{ bzw. } \Delta_2 T = T_1 - T_4 = T_2 - T_3$$

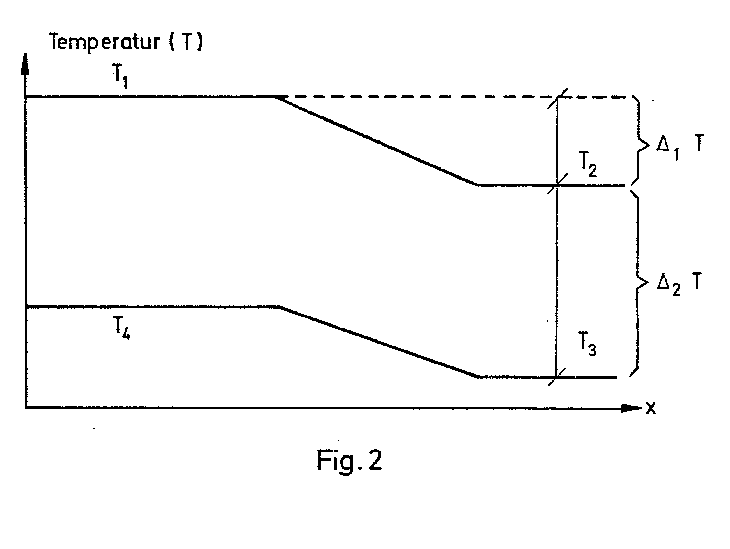

Unterstellt man, dass die Wärmeleitung ausschliesslich senkrecht zur Symmetrieachse S erfolgt, was man z.B. mit hinreichender Genauigkeit durch einen sehr geringen Abstand zwischen Vorlauf und Rücklauf an der Wärmeleitstrecke erreichen kann, so ergibt sich der in Fig. 2 dargestellte Temperaturverlauf. Da die Temperaturdifferenz zwischen zwei Temperaturmesspunkten am Vorlauf und Rücklauf, die symmetrisch zur Symmetrieachse S liegen, immer gleich ist, wird pro Zeiteinheit über die Wärmeleitstrecke eine Wärmemenge

$$\dot{Q}_1 = \alpha \cdot \Delta_2 T \qquad (I)$$

transportiert (vereinfachte Wärmetauscherformel). $\alpha$ ist eine «Wärmedurchgangszahl» und ist die Zusammenfassung aus Wärmeübergangs- und Wärmeleitzahlen. Sie hängt lediglich von der Geometrie ab und wird zur Erzielung der Proportionalität zwischen Temperaturdifferenz und zu- und abgeführter Wärmemenge, wie oben erläutert, durch konstruktive Massnahmen entsprechend beeinflusst.

Das in Punkt 4 ankommende Wasser wird vom Heizsystem auf die Temperatur $T_1$ erhitzt. Ähnlich wird das Wasser, das in Punkt 2 ankommt, durch den Gebäudeverbrauch auf die Temperatur $T_3$ abgekühlt. Die an das Gebäude pro Zeiteinheit weitergegebene Wärmemenge ist:

$$\dot{Q}_2 = \Phi \cdot c_w \cdot \Delta_2 T \qquad (II)$$

In dieser Gleichung ist $\Phi$ der Massenfluss (g/s °C) und $c_w$ die spezifische Wärme des Wassers (cal/g). Hierbei wird vorausgesetzt, dass $c_w$ temperaturunabhängig ist. In anderen Fällen ist der nachfolgende Rechengang zu verallgemeinern.

Die über die Wärmeleitstrecke abgegebene Wärmemenge $Q_1$ reduziert aber die Temperatur des Vorlaufs von $T_1$ auf $T_2$ bzw. erhöht die Temperatur des Rücklaufs von $T_3$ auf $T_4$. Es gilt also auch

$$\dot{Q}_1 = \Phi \cdot c_w \cdot \Delta_1 T \qquad (III)$$

Bei Berücksichtigung der Gleichung (I) erhält man

$$\Phi \cdot c_w = \alpha \cdot \frac{\Delta_2 T}{\Delta_1 T} \qquad (IV)$$

Setzt man diese Beziehung in Gleichung (II) ein, so ergibt sich für den Wärmefluss

$$\dot{Q}_2 = \alpha \cdot \frac{(\Delta_2 T)^2}{\Delta_1 T} \qquad (V)$$

Diese Gleichung enthält ausser den Temperaturdifferenzen $\Delta_1 T$ und $\Delta_2 T$ noch die oben erklärte Konstante $\alpha$.

Die Temperaturdifferenz $\Delta_1 T$ sollte möglichst gering sein, nicht nur um den Wärmetauscher möglichst klein dimensionieren zu können, sondern auch um unnötig hohe Temperaturen $T_1$ bzw. $T_4$ zu vermeiden. In der Regel ist eine Temperaturdifferenz von ca. 1°C ausreichend.

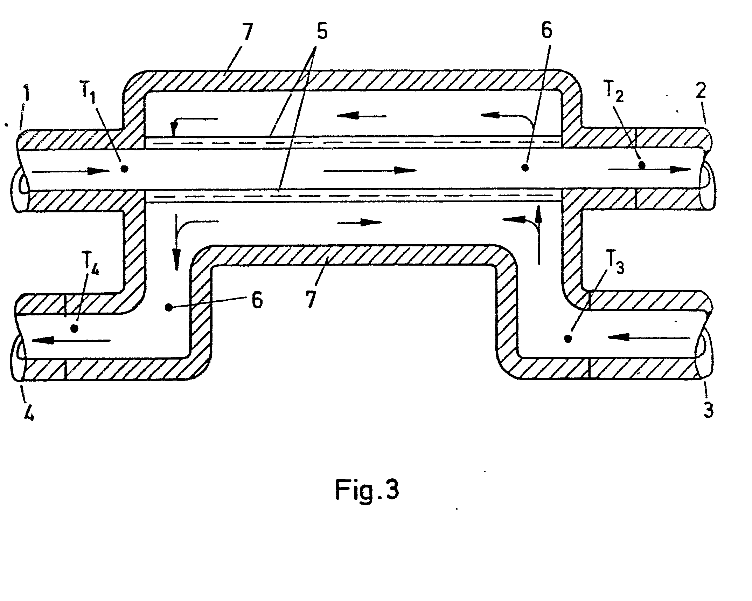

In Fig. 3 wird eine mögliche Ausführungsform für die erfindungsgemässe Wärmeleitstrecke dargestellt, die sehr kompakt aufgebaut und so ausgelegt ist, dass praktisch kein Druckverlust auftritt. Dabei dient der Vorlauf zur entsprechenden Erwärmung des Rücklaufs. Von der speziellen Wärmeleitstrecke 5 nach aussen führen Anschlussstücke 1, 2, 3 und 4, die am Ende jeweils Anschlüsse zur Montage in den restlichen Heizwasserkreislauf aufweisen. Die Temperaturen $T_1$ bis $T_4$ werden an diesen Anschlussstücken z.B. auf der Rohraussenwand gemessen und zwar die Temperaturen $T_1$ und $T_3$ relativ nahe an der Wärmeleitstrecke, die Temperaturen $T_2$ und $T_4$ relativ

weit weg von der Wärmeleitstrecke. Sollte es aus besonderen Gründen erforderlich sein, die Anschlussstutzen relativ kurz auszuführen, so ist jeweils in Flussrichtung vor der Temperaturmessstelle durch besondere Massnahmen, z.B. durch Vermischungseinrichtungen an geeigneten Stellen 6, eine gute Temperaturdurchmischung zu gewährleisten. Nach aussen ist das Gesamtsystem bis zu den Anschlussstücken durch eine Wärmeisolierung 7 wärmeisoliert.

Als Temperaturmessgeber sind NTC-Widerstände angeordnet. Diese Widerstände sind entsprechend geschaltet und werden zyklisch abgefragt. Das Ergebnis der Abfragen wird in binärer Form über eine Signalleitung an einen Rechner weitergegeben. Der Rechner prüft dann die Identität der Gleichung

$$T_1{-}T_2 \;=\; T_4{-}T_3$$

und meldet einen Fehler, wenn diese Beziehung nicht innerhalb vorgegebener Toleranzen erfüllt ist. Weiterhin berechnet er den Wärmefluss $\dot{Q}_2$ gemäss der Gleichung (V). Addiert wird dieser Wert zunächst auf einen Speicher, der den Wärmeverbrauch summiert. Weiter wird er zur Aktualisierung des mittleren Wärmeverbrauchs $\bar{\dot{Q}}_2$ verwendet, der in einem zweiten Speicher gespeichert wird, z.B. nach der folgenden Gleichung

$$\bar{\dot{Q}}_2\,(t+\Delta t) \;=\; \frac{1}{256}\,\dot{Q}_2\,(t+\Delta t) + \frac{255}{256}\,\bar{\dot{Q}}_2\,(t) \quad (VI)$$

so dass der Wert $\bar{\dot{Q}}_2\,(t+\Delta t)$ einem «exponentiellen «Smoothing» entspricht. Dieser Wert wird angezeigt.

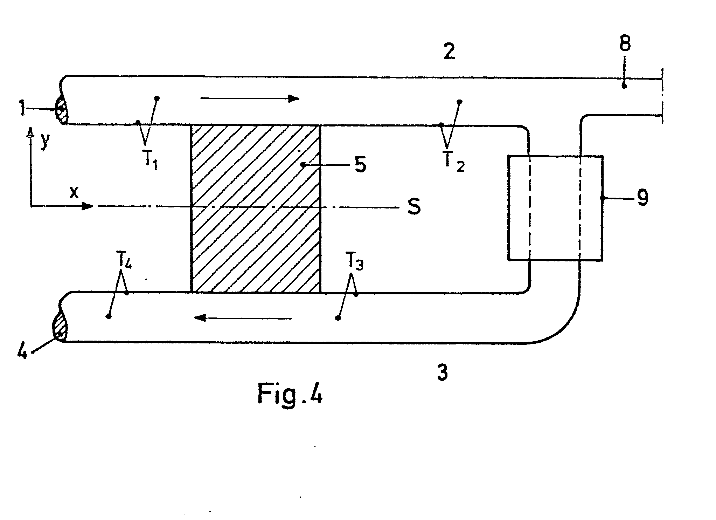

Im folgenden wird das erfindungsgemässe Verfahren am Beispiel einer Kraftstoffzuführung erläutert. Demzufolge ist in Fig. 4 zwischen den Punkten 1 und 2 ein Stück der Zulaufleitung gezeichnet, in dem der Kraftstoff von 1 nach 2 fliesst. Zwischen den Punkten 3 und 4 liegt die Rücklaufleitung, in der eine geringere Menge Kraftstoff von 3 nach 4 fliesst, weil über die Verbrauchsleitung 8 Kraftstoff abgezweigt wird. Zwischen Zulaufleitung und Rücklaufleitung befindet sich die Wärmeleitstrecke 5, die als schraffierte Fläche gezeichnet ist. Die Temperaturen des Kraftstoffs in der Zulaufleitung und Rücklaufleitung sind unterschiedlich, und zwar entweder infolge Kühlung durch Fahrtwind bzw. Propeller oder infolge Erwärmung durch Einspritzpumpe oder Vergaser. In Systemen, in denen eine Temperaturänderung nicht ohne weiteres erzeugbar ist, wird hinter der Verbrauchsleitung 8 eine Heiz- oder Kühleinrichtung 9 vorgesehen.

Beim Betrieb des in Fig. 4 gezeichneten Systems durchfliesst der Kraftstoff mit der Temperatur $T_1$ den Punkt 1 und bleibt bis zu Beginn der Wärmeleitung auf dem Temperaturniveau $T_1$.

Durch die Wärmeleitstrecke 5 wird ab diesem Punkt eine Wärmemenge von der Rücklaufleitung abgeführt, wenn eine Kühlung vorgesehen wird, so dass in der Zulaufleitung hinter der Wärmeleitstrecke der Kraftstoff eine niedrigere Temperatur

$T_2$ besitzt, mit der er den Punkt 2 durchfliesst. Nach Abzweigen der Verbrauchsmenge über die Verbrauchsleitung 8 und nach Durchlauf durch den Kühler 9 gelangt der Restkraftstoff zum Punkt 3 mit der Temperatur $T_3$. Durch die Wärmeleitstrecke wird von der Zulaufleitung eine bestimmte Wärmemenge zugeführt, so dass er die Wärmeleitstrecke mit der höheren Temperatur $T_4$ verlässt, mit der er auch den Punkt 4 durchläuft. Danach wird der Restkraftstoff zum Tank zurückgeführt.

Wenn die spezifische Wärme des warmen Kraftstoffs nahezu genauso gross ist wie die des kälteren Kraftstoffs (dies ist bei nur 5°C Temperaturunterschied im Rahmen der erforderlichen Messgenauigkeit gegeben) gelten die folgenden Beziehungen:

$$\Delta_1 T \;=\; T_1{-}T_2, \; \Delta_2 T \;=\; T_2{-}T_3, \; \Delta_3 T \;=\; T_4{-}T_3 \text{ und}$$
$$\Delta_4 T \;=\; T_1{-}T_4$$

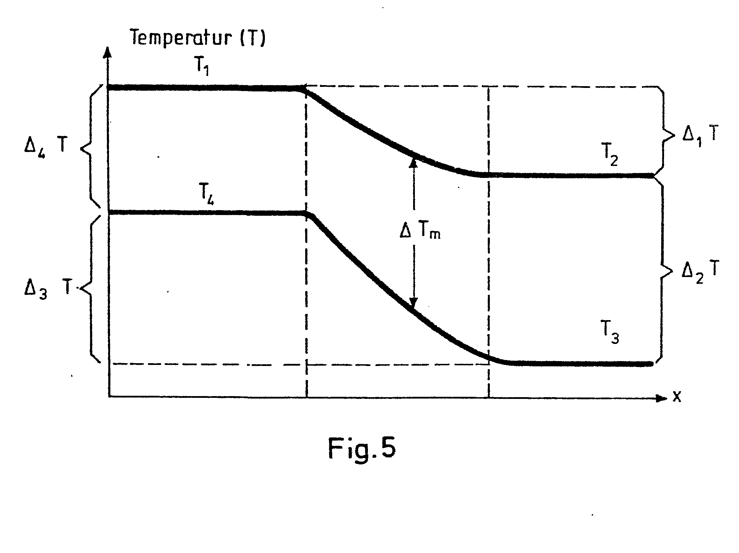

Unterstellt man, dass die Wärmeleitung ausschliesslich senkrecht zur Symmetrieachse S erfolgt, so ergibt sich der in Fig. 5 dargestellte Temperaturverlauf. Da die Temperaturdifferenzen zwischen zwei Punkten an der Zulaufleitung und Rücklaufleitung, die symmetrisch zur Symmetrieachse S liegen, je nach Ort verschieden sind, wird insgesamt über die Wärmeleitstrecke eine Wärmemenge $\dot{Q}_1$ pro Zeiteinheit transportiert:

$$\dot{Q}_1 \;=\; \alpha \cdot \Delta T_m \qquad (VII)$$

Dabei ist $\Delta T_m$ die mittlere treibende Temperaturdifferenz, die sich wie folgt ergibt:

$$\Delta T_m = \frac{\Delta_2 T - \Delta_4 T}{\ln\!\left(\dfrac{\Delta_2 T}{\Delta_4 T}\right)} \qquad (VIII)$$

$\alpha$ ist eine «Wärmedurchgangszahl» und die Zusammenfassung aus Wärmeübergangs- und Wärmeleitzahlen. Sie hängt lediglich von Geometrie und Werkstoff der Wärmeleitstrecke ab und kann zur Erzielung der Proportionalität zwischen mittlerer Temperaturdifferenz $T_m$ und zu- und abgeführter Wärmemenge, wie oben erläutert, durch konstruktive Massnahmen entsprechend beeinflusst werden.

Die über die Wärmeleitstrecke pro Zeiteinheit abgegebene Wärmemenge $\dot{Q}_1$ reduziert die Temperatur in die Zulaufleitung von $T_1$ auf $T_2$ bzw. erhöht die Temperatur in der Rücklaufleitung von $T_3$ auf $T_4$. Es gilt also auch

$$\dot{Q}_1 \;=\; \Phi_{Zulauf} \cdot C_K \cdot \Delta_1 T \;=\; \Phi_{Rücklauf} \cdot C_K \cdot \Delta_3 T \quad (IX)$$

$C_K$ ist die spezifische Wärme des Kraftstoffs.

Bei Berücksichtigung der Gleichung (VII) erhält man

$$\Phi_{Zulauf} \cdot C_K = \alpha \frac{\Delta T_m}{\Delta_1 T} \qquad (X)$$

$$\Phi_{Rücklauf} \cdot C_K = \alpha \frac{\Delta T_m}{\Delta_3 T} \qquad (XI)$$

Die Verbrauchsmenge bzw. Massenfluss $\Phi$ ergibt sich als Differenz zwischen Zulauf und Rücklauf:

$$\Phi \cdot C_K = \Phi_{Zulauf} \cdot C_K - \Phi_{Rücklauf} \cdot C_K = \alpha \cdot \Delta T_m \cdot \left( \frac{1}{\Delta_1 T} - \frac{1}{\Delta_3 T} \right) \quad (XII)$$

Diese Gleichung enthält ausser den Temperaturdifferenzen $\Delta_1 T$, $\Delta_2 T$, $\Delta_3 T$ und $\Delta_4 T$ ($\Delta T_m$ ergibt sich aus $\Delta_2 T$ und $\Delta_4 T$) noch die oben erklärte Konstante $\alpha$ und die spezifische Wärme des Kraftstoffs $C_K$. Wenn die Durchflussmengen in der Zulaufleitung und Rücklaufleitung gleich sind, weil keine Verbrauchsleitung abgezweigt wird, werden zur Ermittlung des Massenflusses die Beziehungen (X) und (XI) entsprechend angewendet.

Die Temperaturdifferenzen $\Delta_1 T$ und $\Delta_3 T$ sollten möglichst gering sein, nicht nur um die Wärmeleitstrecke möglichst klein dimensionieren zu können, sondern auch um unnötig hohe Temperaturdifferenzen $\Delta_2 T$ bzw. $\Delta_4 T$ zu vermeiden. In der Regel sind dafür Temperaturdifferenzen von ca. 2 bis 3°C ausreichend. Bei entsprechender Dimensionierung der Wärmeleitstrecke ergeben sich daraus Temperaturdifferenzen $\Delta_1 T$ und $\Delta_3 T$ von 0,5 bis 1°C. Diese Überlegungen gelten sinngemäss mit anderen Vorzeichen, wenn anstelle der Kühlung eine Heizung vorgesehen wird.

Erfindungsgemäss wird zur Realisierung der Wärmeleitstrecke die Zulaufleitung und Rücklaufleitung zusammengelegt und für den Wärmeübergang eine Trennwand mit stark vergrösserter Oberfläche vorgesehen. Die Temperaturen können an Anschlussstücken der Wärmeleitstrecke, z.B. auf der Rohraussenwand, gemessen werden, und zwar die Temperaturen $T_1$ und $T_3$ relativ nahe an der Wärmeleitstrecke, die Temperaturen $T_2$ und $T_4$ relativ weit weg von der Wärmeleitstrecke. Sollte es aus besonderen Gründen erforderlich sein, die Anschlussstutzen sehr kurz auszuführen, so ist jeweils in Flussrichtung vor der Temperaturmessstelle durch besondere Massnahmen, z.B. durch Vermischungseinrichtungen an geeigneten Stellen, eine gute Temperaturdurchmischung zu gewährleisten. Nach aussen ist das Gesamtsystem bis zu den Anschlussstücken wärmeisoliert.

Als Temperaturmessgeber sind NTC-Widerstände oder Thermoelemente vorteilhaft. Diese Messgeber werden entsprechend geschaltet und cyclisch abgefragt. Das Ergebnis der Abfragen wird in binärer Form über eine Signalleitung an einen Rechner weitergegeben.

Der Rechner prüft dann die Identität der Gleichung

$$\Delta_1 T + \Delta_2 T = \Delta_3 T + \Delta_4 T$$

und meldet einen Fehler, wenn diese Beziehung nicht innerhalb der vorgegebenen Toleranzen erfüllt ist. Weiterhin berechnet er den Kraftstoffverbrauch $\Phi$ gemäss der Gleichung (XII). Addiert wird dieser Wert zunächst auf einen Speicher, der den Kraftstoffverbrauch $\Phi$ summiert. Weiter wird er zur Aktualisierung eines mittleren Kraftstoffverbrauchs innerhalb einer bestimmten Zeitspanne $\Phi_m$ verwendet, der in einem zweiten Speicher gespeichert wird, z.B. nach der folgenden Gleichung

$$\Phi_m(t + \Delta t) = \frac{1}{16} \Phi(t + \Delta t) + \frac{15}{16} \Phi_m(t) \quad (XIII)$$

so dass der Wert $\Phi_m$ (t + $\Delta$t) einem «exponentiellen Smoothing» entspricht. Dieser Wert wird angezeigt.

Die genannten Werte können zusammen mit anderen notwendigen Daten, wie Uhrzeit usw., auf einem Display im cyclischen Turnus zur Anzeige gebracht werden. Das «exponentielle Smoothing» wurde hier deshalb gewählt, weil den Benutzer eine integrale Aussage über den Kraftstoffverbrauch, z.B. innerhalb der letzten 30 Sekunden, mehr interessiert als eine Aussage über den augenblicklichen Kraftstoffverbrauch, bzw. Wärmeverbrauch.

Zugleich ermöglicht das «exponentielle Smoothing» eine vierstellige Ausgabe, während bei einer Direktanzeige des momentanen Wärmeflusses aus Gründen der Messgenauigkeit nur zwei Stellen angezeigt werden können.

**Patentansprüche**

1. Vorrichtung zur Messung des Massenflusses und des Wärmeflusses bei einem Förderungssystem für Fluide, bestehend im wesentlichen aus je einer in die Zulaufleitung und einer in die Rücklaufleitung einzufügenden Durchflussleitung, aus einer Wärmeleitstrecke zwischen diesen beiden Durchflussleitungen und aus Temperaturmessfühlern in den Durchflussleitungen, wobei der Wärmedurchgang durch die Wärmeleitstrecke hindurch geringer ist als der Wärmeübergang an den beiden Grenzflächen zwischen dem Fluid und der Wärmeleitstrecke, dadurch gekennzeichnet, dass die Wärmeleitstrecke (5) aus einem Material mit geringer Wärmeleitfähigkeit unterhalb von 70 W/mK besteht.

2. Vorrichtung nach Anspruch 1, dadurch gekennzeichnet, dass die Temperaturmessstellen ($T_1$, $T_2$, $T_3$, $T_4$) an den Enden der Wärmeübergangszonen zu der Wärmeleitstrecke (5) in den Durchflussleitungen (1–2; 3–4) angeordnet und mit einer elektronischen Einheit zur Auswertung der Messwerte verbunden sind.

3. Vorrichtung nach Anspruch 1 oder 2, dadurch gekennzeichnet, dass von den vier möglichen Temperaturmesspunkten ($T_1$, $T_2$, $T_3$, $T_4$) vor und nach der Wärmeleitstrecke (5) in den Durchflussleitungen (1–2, 3–4) nur drei mit einem Temperaturfühler besetzt sind und dass aus den drei Messwerten zwei Differenzen bildbar sind und an die Auswerteeinheit gelangen.

4. Vorrichtung nach einem der Ansprüche 1 bis 3, dadurch gekennzeichnet, dass die Wärmeleitstrecke (5) aus Glas oder einem Verbundwerkstoff, z.B. emaille- oder kunststoffbeschichtetem Stahl, besteht.

5. Vorrichtung nach einem der Ansprüche 1 bis 4, dadurch gekennzeichnet, dass zur Ermittlung des Massenflusses zwischen den Durchflussleitungen (1–2; 3–4) eine Verbrauchsleitung (8) abgezweigt ist.

6. Vorrichtung nach Anspruch 5, dadurch gekennzeichnet, dass die Durchflussleitungen (1–2; 3–4) durch eine künstliche Kühl- oder Heizzone (9) derart miteinander verbunden sind, dass eine vorbestimmte Wärmemenge abgeführt oder zugeführt wird.

7. Verfahren zur Bestimmung des Massenflusses bei einem Förderungssystem für Fluide, bei dem über eine Wärmeleitstrecke eine definierte Wärmemenge pro Zeiteinheit vom Zulauf zum Rücklauf oder umgekehrt transportiert wird sowie am oder nahe der Enden der beiden Wärmeübergangszonen im Zulauf und Rücklauf Temperaturen oder Temperaturdifferenzen des Fluids gemessen werden und aus den Temperaturdifferenzen der Massenfluss des Fluids ermittelt wird, dadurch gekennzeichnet, dass zwischen Zulauf und Rücklauf eine vorbestimmte Wärmemenge abgeführt oder zugeführt und dadurch künstlich eine Temperaturänderung erzeugt wird.

8. Verfahren nach Anspruch 7, dadurch gekennzeichnet, dass zwischen Zulauf und Rücklauf eine Temperaturänderung von weniger als 5 °C erzeugt wird.

9. Verfahren nach Anspruch 7 oder 8, dadurch gekennzeichnet, dass zur Bestimmung des Massenflusses in der Verbrauchsleitung eines Förderungssystems nach dem Umlaufprinzip die Differenz der Massenflüsse in der Zulaufleitung und Rücklaufleitung ermittelt wird.

10. Verfahren nach Anspruch 9, dadurch gekennzeichnet, dass die Temperaturänderung zwischen Zulauf und Rücklauf nach Abzweigung der Verbrauchsleitung erzeugt wird.

## Claims

1. Device for measuring the mass flow and the heat flow in a fluid conveying system which consists essentially of two fluid carrying tubes each to be mounted in the feed line and the return line, of a heat conducting section between these two fluid carrying tubes and of temperature sensors in said tubes, whereby the heat transmission through the heat conducting section is lower than the heat transfer at the two interfaces between the fluid and the heat conducting section, characterized in that the heat conducting section (5) consists of a material of low thermal conductivity of less than 70 W/mk.

2. Device according to Claim 1, wherein the temperature measuring points ($T_1$, $T_2$, $T_3$, $T_4$) are arranged at the ends of the heat transfer zones to the heat conducting section (5) in the fluid carrying tubes (1–2; 3–4) and connected to an electronic unit for evaluating the measured values.

3. Device according to Claim 1 or 2, wherein only three of the four possible temperature measuring points ($T_1$, $T_2$, $T_3$, $T_4$) upstream and downstream of the heat conducting section (5) in the fluid carrying tubes (1–2; 3–4) are provided with a temperature sensor and two differences can be formed from the three measured values and supplied to the evaluating unit.

4. Device according to any of the Claims 1 to 3, wherein the heat conducting section (5) consists of glass or a composite material, e.g. enamel- or plastic-coated steel.

5. Device according to any of the Claims 1 to 4, wherein a consumption line (8) is branched off between the fluid carrying tubes (1–2; 3–4) to determine the mass flow.

6. Device according to Claim 5, wherein the fluid carrying tubes (1–2; 3–4) are connected by a artificial cooling or heating zone (9) so that a predetermined amount of heat is led off or supplied.

7. Method for determining the mass flow in a fluid conveying system according to which a specific amount of heat is transported per unit time from feed line to return line and vice versa through a heat conducting section and at or close to the ends of the two heat transfer zones in the feed line and the return line temperatures or temperature differences of the fluid are measured and the mass flow of the fluid is determined from temperature differences, characterized in that a predetermined amount of heat is led off or supplied between feed line and return line, whereby a change in temperature is caused artificially.

8. Method according to Claim 7, wherein a temperature change of less than 5 °C is caused between the feed line and the return line.

9. Method according to Claim 7 or 8, wherein the difference of the mass flows in the feed line and the return line is determined in order to evaluate the mass flow in the consumption line of a conveying system operating according to the circulation principle.

10. Method according to Claim 9, wherein the temperature change between feed line and return line is produced downstream of the branching point of the consumption line.

## Revendications

1. Dispositif pour mesurer le débit massique et le flux thermique dans un système d'alimentation de fluide, constitué essentiellement de conduites d'écoulement qui s'insèrent l'une dans la conduite d'arrivée et l'autre dans la conduite de retour, d'un tronçon conducteur de la chaleur placé entre ces deux conduites d'écoulement, et de détecteurs de la température placés sur les conduites d'écoulement, le passage de chaleur dans le tronçon conducteur de la chaleur étant plus faible que la transmission de chaleur aux deux surfaces limites entre le fluide et le tronçon conducteur de la chaleur, dispositif caractérisé en ce que le tronçon conducteur de la chaleur (5) est fait d'une matière ayant une faible conductibilité thermique, inférieure à 70 W/mk.

2. Dispositif suivant la revendication 1, caractérisé en ce que les points de mesure de la température ($T_1$, $T_2$, $T_3$, $T_4$) sont placés sur les extrémités des zones de transmission de chaleur vers le tronçon conducteur de la chaleur (5), sur les conduites de passage (1–2; 3–4) et sont reliés avec un appareil électronique destiné à traiter les chiffres mesurés.

3. Dispositif suivant l'une des revendications 1 et 2, caractérisé en ce que les quatre points possibles de mesure de la température, (T₁, T₂, T₃, T₄) avant et après le tronçon conducteur de la chaleur (5) placés sur les conduites de passage (1–2; 3–4), trois seulement sont occupés par un détecteur de la température, et que l'on peut former, à partir des trois points de mesure, deux différences qui arrivent à l'appareil de traitement.

4. Dispositif suivant l'une quelconque des revendications 1 à 3, caractérisé en ce que le tronçon conducteur de la chaleur (5) est fait de verre ou d'un matériau composite, par exemple d'acier revêtu d'émail ou de matière plastique.

5. Dispositif suivant l'une quelconque des revendications 1 à 4, caractérisé en ce que, pour déterminer le débit massique, on dérive une conduite de consommation (8) entre les conduites d'écoulement (1–2; 3–4).

6. Dispositif suivant la revendication 5, caractérisé en ce que les conduites d'écoulement (1–2; 3–4) sont reliées ensemble par une zone de refroidissement ou de chauffage artificielles (9) de façon telle qu'il est évacué ou apporté une quantité de chaleur déterminée.

7. Procédé pour la détermination du débit massique dans un système d'alimentation en fluide, dans lequel il est transporté, au moyen d'un tronçon conducteur de la chaleur, une quantité définie de chaleur par unité de temps, de l'arrivée au retour ou inversement, pendant que, sur ou près des extrémités des deux zones de transmission de chaleur, on mesure sur l'arrivée et sur le retour des températures ou des différences de températures du fluide, et qu'à partir des différences de températures, on détermine le débit massique de fluide, procédé caractérisé en ce que, entre l'arrivée et le retour, on évacue ou apporte une quantité déterminée de chaleur, et produit de cette façon, artificiellement, une différence de température.

8. Procédé suivant l'une des revendications 7, caractérisé en ce que, entre l'arrivée et le retour, il est produit une modification de la température de moins de 5 °C.

9. Procédé suivant l'une des revendications 7 et 8, caractérisé en ce que, pour déterminer le débit massique dans la conduite de consommation d'un système d'alimentation fonctionnant sur le principe de circulation, on recherche la différence des débits massiques dans la conduite d'arrivée et dans la conduite de retour.

10. Procédé suivant la revendication 9, caractérisé en ce que la différence de température entre l'arrivée et le retour est produite après la dérivation de la conduite de consommation.

Fig.1

Fig. 2

Fig.3

Fig.4

Fig.5